# EUROPÄISCHE PATENTANMELDUNG

(11) **EP 4 704 422 A1**
(43) Veröffentlichungstag der Anmeldung: **04.03.2026**
(21) Anmeldenummer: 24197528.3
(22) Anmeldetag: 30.08.2024
(51) Int. Cl.: H04N 21/234, G11B 27/02, H04N 21/431, H04N 21/472, H04N 21/81, H04N 21/854

(54) **VERFAHREN UND VORRICHTUNG ZUM ERZEUGEN EINES GERENDERTEN VIDEOSTREAMS, INSBESONDERE FÜR EINE LIVE-ÜBERTRAGUNG**

(71) Anmelder: Red Bull GmbH, 5330 Fuschl am See (AT)
(72) Erfinder: Bonecker, Stefan, 5101 Bergheim (AT); He, Fangliang, 5020 Salzburg (AT); Dörr, Alexander, 83646 Bad Tölz (DE); Maxl, Florian, 5411 Oberalm (AT); Grimm, Oliver, 80639 München (DE); Drexler, Simon, 82278 Hörbach (DE); Sonnleitner, Mathias, 1070 Wien (AT)
(74) Vertreter: Metten, Karl-Heinz

(57) **Zusammenfassung**

Die vorliegende Erfindung betrifft ein Verfahren zum Erzeugen eines gerenderten Videostreams, insbesondere für eine Live-Übertragung. Ferner betrifft die Erfindung eine Vorrichtung, insbesondere einen Prozessor, zum Erzeugen eines gerenderten Videostreams sowie ein Computerprogrammprodukt, umfassend Befehle, die bei der Ausführung des Programms durch eine Datenverarbeitungsvorrichtung diese veranlassen, die Schritte des erfindungsgemäßen Verfahrens auszuführen. Des Weiteren betrifft die Erfindung ein computerlesbares Speichermedium, umfassend Befehle, die bei der Ausführung durch einen Computer diesen veranlassen, die Schritte des erfindungsgemäßen Verfahrens auszuführen, sowie ein System zum Erzeugen eines gerenderten Videostreams, umfassend die erfindungsgemäße Vorrichtung.

## Beschreibung

Die vorliegende Erfindung betrifft ein Verfahren zum Erzeugen eines gerenderten Videostreams, insbesondere für eine Live-Übertragung, eine Vorrichtung zum Erzeugen eines gerenderten Videostreams, insbesondere für eine Live-Übertragung, und ein System zum Erzeugen eines gerenderten Videostreams, insbesondere für eine Live-Übertragung, sowie ein entsprechendes Computerprogrammprodukt und ein computerlesbares Speichermedium.

Bei der Live-Übertragung werden Ton- und/ oder Bildaufnahmen in Echtzeit bzw. nahezu Echtzeit an Endabnehmer übertragen, ohne zuvor aufgezeichnet und dauerhaft gespeichert zu werden. Dabei wird ein Videostream mit einer Vielzahl von aufeinanderfolgenden Bildern von der Bildaufnahmeeinrichtung unmittelbar an eine Sendezentrale weitergeleitet, die den Videostream unmittelbar an die Endabnehmer weiterleitet, beispielsweise durch Einbinden in ein Fernsehprogramm oder Hochladen auf eine Plattform.

Bei der Live-Übertragung ist es wünschenswert, Objekte wie Gegenstände oder Personen während der Übertragung in einer geeigneten Umgebung darzustellen. Die Objekte können dazu unmittelbar in der entsprechenden Umgebung positioniert werden. Dies ist allerdings regelmäßig aufwendig; beispielsweise muss entsprechendes Studioequipment vor Ort zur Verfügung gestellt werden.

Deshalb werden die Objekte häufig in einer speziell eingerichteten Studioumgebung in einem Gebäude positioniert. Die Aufnahme der Objekte in dem Studio erfolgt mittels einer Bildaufnahmeeinrichtung wie einer Kamera, die den Videostream in der Studioumgebung aufnimmt und den aufgenommenen Videostream unmittelbar an die Sendezentrale weiterleitet. In der Sendezentrale kann der Videostream darüber hinaus angepasst und nachbearbeitet werden. Die einzelnen Bilder des Videostreams können abhängig von dem zur Verfügung stehenden Pufferspeicher und der Bandbreite einzeln an aufeinanderfolgenden Zeitpunkten entsprechend der Aufnahmezeit der einzelnen Bilder oder in Gruppen in Echtzeit an die Sendezentrale gesandt werden.

Insbesondere bei der weiteren Verwendung des aufgenommenen und eventuell nachbearbeiteten Videostreams, beispielsweise für das Fernsehen oder Werbeclips, ist eine hohe Qualität der Aufnahmen sowie der Nachbearbeitung wünschenswert. Bei der Aufnahme und Nachbearbeitung eines solches Videostreams fallen regelmäßig größere Datenmengen an, die insbesondere in Echtzeit verarbeitet werden müssen. Ein Vorteil einer Studioumgebung ist, dass leistungsstarkes Equipment vorinstalliert werden kann, was es ermöglicht, qualitativ hochwertige Bilder aufzunehmen, die entsprechende Datenmengen zu verarbeiten und die nötigen Bandbreiten zur Übertragung bereitstellen. Darüber hinaus können in einer Studioumgebung die Umgebungsbedingungen, wie etwa die Beleuchtung der Objekte durch Scheinwerfer oder eine aufgenommene Tonqualität durch die Wahl von Mikrophonen, eingestellt werden.

Außerdem kann innerhalb des Studios die Umgebung der aufgenommenen Objekte modelliert werden. In den letzten Jahren wurden die Technologien entwickelt, Objekte in der Studioumgebung freizustellen. Dazu werden die Objekte vor einem in einem einheitlichen Grünton gehaltenen Hintergrund abgebildet. Der grünliche Hintergrund kann im Wege der Nachbearbeitung des Videostreams von den davor befindlichen Objekten isoliert werden und durch einen anderen Hintergrund ersetzt werden. Bei der Übertragung in einem solchen Videostream ist es insbesondere wichtig, dass sich das Objekt möglichst realistisch in die Umgebung einfügt. Der Grünton des Hintergrunds hat sich dabei als vorteilhaft erwiesen, da herkömmliche Objekte durch die zur Verfügung stehende Software von dem grünen Hintergrund besonders effizient isoliert werden können. Die dafür notwendigen Rechenschritte können durch die in der Studioumgebung einsetzbaren leistungsstarken Komponenten und herkömmliche Software hochwertig umgesetzt werden, sodass das Ersetzten des Hintergrunds für einen Betrachter, wenn überhaupt, in der Live-Übertragung nur schwer erkennbar ist.

Der ersetzte Hintergrund ist dabei im Wesentlichen frei wählbar, und es kann auf eine Vielzahl von bestehenden, in digitaler Form gespeicherten Hintergründen zurückgegriffen werden. Dadurch ist es möglich, Objekte aus dem Studio in einer frei wählbaren digitalen Umgebung in einem Videostream realistisch wiederzugeben.

Allerdings haben sich die bisherigen Ansätze zum Erzeugen eines solchen Videostreams als nicht ausreichend flexibel erwiesen. So ist eine räumliche Studioumgebung nicht für jedes Objekt geeignet. Außerdem ist das Einrichten eines Studios aufwändig und kostenintensiv, insbesondere wenn themenabhängig Aktualisierungen oder Anpassungen vorgenommen werden müssen.

Die Aufgabe der vorliegenden Erfindung hat demnach darin bestanden, die bisherigen Ansätze zum Erzeugen eines Videostreams für eine Live-Übertragung zu verbessern, insbesondere dahingehend, ein Verfahren zum Erzeugen eines Videostreams, insbesondere für Live-Übertragungen, bereitzustellen, welches flexibel einsetzbar und möglichst kostengünstig zu realisieren ist.

Die Aufgabe wird gelöst durch das erfindungsgemäße Verfahren zum Erzeugen eines gerenderten Videostreams, insbesondere für eine Live-Übertragung. Das erfindungsgemäße Verfahren umfasst die folgenden mittels eines Prozessors durchgeführten Schritte: Empfangen eines Videostreams mit einer Vielzahl von realen Umgebungsbilden, beispielsweise von einer Bildaufnahmeeinheit; und Empfangen von Rohdaten von mindestens einem virtuellen Objekt, beispielsweise von einem externen Server. Weiterhin umfasst das Verfahren die mittels des Prozessors durchgeführten Schritte für ein erstes reales Umgebungsbild der Vielzahl von Umgebungsbilden: Erzeugen von Renderdaten für das mindestens eine virtuelle Objekt, Rendern des mindestens einen virtuellen Objekts basierend auf den Rohdaten und den Renderdaten, und Erzeugen eines gerenderten ersten Bilds durch Einfügen des mindestens einen gerenderten virtuellen Objekts in das erste reale Umgebungsbild. Das gerenderte erste Bild wird in dem gerenderten Videostream umfassend eine Vielzahl von gerenderten Bildern ausgegeben. Der gerenderte Videostream kann beispielsweise an eine externe Entität, wie eine Sendezentrale, vorzugsweise unmittelbar, ausgegeben werden. In zweckmäßigen Ausführungsformen kann der gerenderte Videostreams über eine NDI-Verbindung ausgegeben werden.

Mit dem erfindungsgemäßen Verfahren kann in einem Videostream für eine Live-Übertragung ein virtuelles Objekt in ein real aufgenommenes Umgebungsbild eingefügt werden, anstelle den Hintergrund zu einem real aufgenommenen Objekt digital zu ersetzen. Das erfindungsgemäße Verfahren ist dadurch flexibel und vielseitig einsetzbar. Die Umgebungsbilder des Videostreams können vor Ort aufgenommen werden, und es können beliebige virtuelle Objekte in die realen Umgebungsbilder eingefügt werden. Das erfindungsgemäße Verfahren unterliegt damit nicht mehr den bisherigen Restriktionen eines Studios, insbesondere auch nicht den räumlichen Restriktionen eines Studios.

Darüber hinaus kann das erfindungsgemäße Verfahren auf herkömmlicher Hardware, beispielsweise einer Entität wie etwa ein Smartphone oder Tablet, die regelmäßig mit einer Kamera ausgestattet sind, durchgeführt werden. Auch dadurch wird eine höhere Flexibilität erreicht. Aufnahmen für die Live-Übertragung können erheblich vereinfacht werden kann.

Außerdem kann das erfindungsgemäße Verfahren sehr kostengünstig realisiert werden. So ist z.B. die Einrichtung und Ausstattung eines Studios zur Live-Übertragung nicht mehr erforderlich.

Im Vergleich zu der Aufnahme in einem Studio können auch die zu verarbeitenden Datenmengen bzw. der Aufwand, eine realistische Wiedergabe zu erzeugen, reduziert werden. Es ist in der Regel lediglich das virtuelle Objekt an die Umgebungsbedingungen anzupassen, was besonders vorteilhaft bei der Live-Übertragung in Echtzeit ist. Nicht zuletzt werden so ebenfalls die Hardware-Anforderungen reduziert, was es ermöglicht, bei der Ausführung des Verfahrens auf herkömmliche Hardware wie ein Tablet oder Smartphone zurückgreifen.

Mit dem erfindungsgemäßen Verfahren können realistische Videostreams erzeugt werden; es ist im Allgemeinen lediglich das virtuelle Objekt der ansonsten realen Szenerie anzupassen.

Gemäß einem besonders bevorzugen Aspekt wird das erfindungsgemäße Verfahren durch ein Smartphone oder ein Tablet durchgeführt, beispielsweise durch den Prozessor eines Smartphones oder Tablets.

Gemäß dem erfindungsgemäßen Verfahren wird durch den Prozessor ein Videostream mit einer Vielzahl von realen Umgebungsbildern empfangen. Der Videostream mit den realen Umgebungsbilder kann mit einer Bildaufnahmeeinheit wie etwa einer Kamera aufgenommen und an den Prozessor gesandt werden. Die realen Umgebungsbilder können von dem Prozessor unmittelbar in Echtzeit bzw. nahezu Echtzeit von der Bildaufnahmeeinrichtung empfangen werden. Beispielsweise kann die Vielzahl von realen Umgebungsbildern des Videostreams an aufeinanderfolgenden Zeitpunkten empfangen werden, vorzugweise bei einer Bildrate von 30 bis 120 Bildern/Sekunde oder als Bundle von mehreren realen Umgebungsbilden.

Weiterhin empfängt der Prozessor Rohdaten zu dem virtuellen Objekt. Die Rohdaten umfassen insbesondere die grundlegende geometrische Struktur des virtuellen Objekts. Die Rohdaten zu einem virtuellen Objekt können beispielsweise auf einem externen Server hinterlegt sein und von diesem von dem Prozessor empfangen werden. In einigen geeigneten Ausführungsformen können die Rohdaten von dem externen Server an einer Entität, wie etwa einem Smartphone oder Tablet, empfangen und auf einem Speicher der Entität hinterlegt werden. Der Prozessor steht zweckmäßigerweise in Kommunikationsverbindung mit dem Speicher und kann die darin hinterlegten Rohdaten von dem Speicher abrufen. Somit können die Rohdaten durch den Prozessor von dem externen Server über einen Speicher empfangen werden. Anders ausgedrückt können die Rohdaten von einem Speicher, der vorzugsweise Teil derselben Entität wie der Prozessor ist, durch den Prozessor abgerufen werden. Damit kann das erfindungsgemäße Verfahren weiterhin umfassen: Empfangen der Rohdaten von einem Speicher, der vorzugsweise Teil derselben Entität ist, wie der Prozessor und besonders vorzugsweise der Bildaufnahmeeinrichtung. In dieser bevorzugten Ausführungsform benötigt der Prozessor keine stehende Verbindung zu einem externen Server. Die Rohdaten können beispielsweise auf dem Speicher der Entität vorab abgelegt werden.

Für ein reales Umgebungsbild erzeugt der Prozessor in einer besonders geeigneten Ausführungsform des erfindungsgemäßen Verfahrens Renderdaten für das virtuelle Objekt. Renderdaten umfassen insbesondere eine Textur des virtuellen Objekts, wie beispielsweise eine Schattierung, eine Farbgebung und/oder, insbesondere und, Helligkeit. Basierend auf den Rohdaten und den Renderdaten erzeugt der Prozessor ein gerendertes virtuelles Objekt. Während des Renderns wird z.B. die geometrische Struktur aus den Rohdaten mit der Textur aus den Renderdaten versehen und daraus ein gerendertes virtuelles Objekt erzeugt. Das gerenderte virtuelle Objekt wird anschließend in das reale Umgebungsbild eingefügt. Das Einfügen kann beispielsweise durch Ersetzen der Pixel in dem realen Umgebungsbild mit entsprechenden Pixeln des gerenderten virtuellen Objekts erfolgen. Somit kann das virtuelle Objekt möglichst realistisch unter Berücksichtigung der Verhältnisse, wie beispielsweise der Lichtverhältnisse oder der geometrischen Verhältnisse, in dem realen Umgebungsbild in das reale Umgebungsbild eingepasst werden. Ein gerendertes Bild im Sinne dieser Anmeldung ist damit ein reales Umgebungsbild, in welches ein gerendertes virtuelles Objekt eingefügt wurde.

Das gerenderte Bild umfassend das reale Umgebungsbild, in welches das gerenderte virtuelle Objekt eingefügt wurde, wird durch den Prozessor in einem gerenderten Videostream umfassend eine Vielzahl von gerenderten Bildern ausgegeben. Ein gerenderter Videostream im Sinne dieser Anmeldung ist damit ein Videostream umfassend eine Vielzahl von gerenderten Bilden. Der gerenderte Videostream kann beispielsweise an eine Sendezentrale ausgegeben werden. In einigen besonders geeigneten Ausführungsformen kann der gerenderte Videostream von dem Prozessor über eine NDI-(Network Device Interface) Schnittstelle bzw. eine NDI-Verbindung ausgegeben werden. Eine NDI-Verbindung ermöglicht hohe Datenübertragungsraten, was für möglichst geringe Latenzen bei der Übertragung des gerenderten Videostreams sorgt. Eine solche Übertragung ist insbesondere vorteilhaft für Live Anwendungen. Auch kann der gerenderte Videostream über eine lokale Umgebung, wie eine vorzugsweise lokale Wireless Lan-Verbindung oder eine Bluetooth-Verbindung, von dem Prozessor an die Steuereinheit gesandt werden.

Die Ausgabe der gerenderten Bilder erfolgt dabei insbesondere unmittelbar, vorzugsweise in Echtzweit oder in nahezu Echtzeit. Die gerenderten Bilder in dem gerenderten Videostream werden vorzugsweise an aufeinanderfolgenden Zeitpunkten ausgegeben, vorzugsweise bei einer Bildrate von 30 bis 120 Bildern/ Sekunde.

Zur Realisierung einer möglichst latenzfreien Live-Übertragung liegt zwischen dem Empfangen des ersten realen Umgebungsbilds in dem Videostream und dem Ausgeben des daraus resultierenden gerenderten ersten Bilds in dem gerenderten Videostream in besonders geeigneten Ausführungsformen eine Zeitdauer von etwa 150 ms bis 400 ms.

Das Erzeugen von Renderdaten, das Rendern des mindestens einen virtuellen Objekts und das Erzeugen eines gerenderten ersten Bilds kann für ein oder mehrere, vorzugsweise jedes, reales Umgebungsbild in dem Videostream wiederholt werden. Somit können ein oder mehrere, vorzugsweise jedes, der realen Umgebungsbilder in ein jeweiliges gerendertes Bild umgewandelt werden.

Mit dem erfindungsgemäßen Verfahren kann somit in einer Live-Übertragung ein Videostream mit realen Umgebungsbildern vor Ort aufgenommen werden, und es können beliebige virtuelle Objekte realistisch in die realen Umgebungsbilder des Videostreams eingefügt werden. Damit kann ein gerenderter Videostream für eine Live-Übertragung erzeugt werden, in dessen Einzelbilder ein virtuelles Objekt in eine reale Umgebung projiziert wird.

Darüber hinaus sind weitere bevorzugte Aspekte des erfindungsgemäßen Verfahrens vorgesehen.

Gemäß einem Aspekt umfasst das Erzeugen von Renderdaten das Empfangen, von einer Steuereinheit, von ersten Instruktionen zum Erzeugen der Renderdaten, und das Erzeugen der Renderdaten basierend auf diesen ersten Instruktionen. Die Instruktionen können beispielweise über eine TCP/IP-Verbindung oder eine WiFi-Verbindung empfangen werden.

Damit können die Renderdaten, insbesondere die Textur des virtuellen Objekts, in dem gerenderten Videostream über die Steuereinheit angepasst werden. Die Steuereinheit kann beispielsweise eine Schnittstelle, wie ein Touchscreen, aufweisen, die ausgelegt ist, eine Eingabe zum Modifizieren des virtuellen Objekts zu empfangen. Die Steuereinheit kann basierend auf der Eingabe Instruktionen zum Erzeugen der Renderdaten generieren. Die Instruktionen umfassen insbesondere Angaben zu der Textur des virtuellen Objekts. Mit dem erfindungsgemäßen Verfahren wird in einer bevorzugten Ausführungsform auch eine Möglichkeit geschaffen, dass Rendern des virtuellen Objekts auf dem Prozessor mittels der Steuereinheit zu beeinflussen. Insbesondere kann so eine Möglichkeit geschaffen werden, in der ein Nutzer in das Rendern des virtuellen Objekts eingreifen kann, und diese kontrollieren kann, um so eine möglichst realistische Darstellung des virtuellen Objekts in dem realen Umgebungsbild zu realisieren. Das Rendern des virtuellen Objekts ist in einer Ausführungsform damit insbesondere auch während der Live-Übertragung in dem gerenderten Videostream beeinflussbar. Auf diese Weise kann eine möglichst realistische Wiedergabe während der Live-Übertragung realisiert werden. Die Instruktionen können beispielsweise auf einer Nutzereingabe basieren. Denkbar ist allerdings auch, dass die Instruktionen durch eine Messung der Umgebungsbedingungen in der realen Umgebung generiert werden.

In einem weiteren besonders geeigneten Aspekt umfasst das erfindungsgemäße Verfahren ferner die folgenden mittels des Prozessors durchgeführten Schritte: Ausgeben einer Vorschau des gerenderten ersten Bilds an die Steuereinheit; Empfangen, von der Steuereinheit, von zweiten Instruktionen zum Rendern des mindestens einen virtuellen Objekts in Reaktion auf das Ausgeben der Vorschau; für ein zweites, dem ersten realen Umgebungsbild in dem Videostream nachfolgenden Umgebungsbild der Vielzahl von Umgebungsbilder: Erzeugen von zweiten Renderdaten für das mindestens eine virtuelle Objekt basierend auf den zweiten Instruktionen, Rendern des mindestens einen virtuellen Objekts basierend auf den Rohdaten und den zweiten Renderdaten, und Erzeugen eines gerenderten zweiten Bilds durch Einfügen des mindestens einen gerenderten virtuellen Objekts in das zweite reale Umgebungsbild; und Ausgeben des gerenderten zweiten Bilds nach dem gerenderten ersten Bild in dem gerenderten Videostream. Die Kommunikation von dem Prozessor mit der Steuereinheit kann kabellos oder drahtgebunden, vorzugsweise über eine TCP/ IP-Verbindung oder eine WiFi-Verbindung, erfolgen. Auf diese Weise kann eine Möglichkeit für einen Nutzer geschaffen werden, das Rendering, vor allem die Textur des gerenderten virtuellen Objekts, während der Live-Übertragung zu beeinflussen, sodass das virtuelle Objekt selbst bei sich ändernden Umgebungsbedingungen in den realen Umgebungsbildern realistisch in die Umgebungsbedingungen eingepasst werden kann. Durch die Vorschau des gerenderten ersten Bilds kann insbesondere auch eine Möglichkeit geschaffen werden, die Wiedergabe des virtuellen Objekts zu verifizieren. In Reaktion auf das Ausgeben der Vorschau können somit Instruktionen empfangen werden, auf Basis derer das Rendering des virtuellen Objekts in dem zweiten, dem ersten realen Umgebungsbild darauffolgenden Umgebungsbild angepasst werden kann. Das Rendern des virtuellen Objekts kann somit während der Live-Übertragung in dem gerenderten Videostream beeinflusst werden. Auf diese Weise kann eine möglichst realistische Wiedergabe während der Live-Übertragung realisiert werden. Die Steuereinheit kann vorzugsweise eine Displayeinheit umfassen. In einigen Ausführungsformen kann die Displayeinheit ein Touchscreen sein. In anderen Ausführungsformen kann ein Eingabemittel in der Steuereinheit vorgesehen sein, um das Rendern des virtuellen Objekts zu beeinflussen.

In einem weiteren vorteilhaften Aspekt weist die Vorschau eine reduzierte Auflösung im Vergleich zu dem ersten gerenderten Bild auf. Dadurch kann die zwischen dem Prozessor und der Steuereinheit gesendete Datenmenge reduziert werden. Hierdurch lassen sich die Anforderungen an die Bandbreite und die Hardware reduzieren. Auch sind so schnelle Bearbeitungszeiten möglich, was insbesondere vorteilhaft für die Live-Übertragung ist.

In einem weiteren bevorzugten Aspekt umfasst das Verfahren ferner die folgenden mittels des Prozessors durchgeführten Schritte: Empfangen, von der Steuereinheit, von Positionsangaben zum Positionieren des virtuellen Objekts in dem ersten realen Umgebungsbild und/oder dem zweiten realen Umgebungsbild, und Einfügen des mindestens einen gerenderten virtuellen Objekts an einer durch die Positionsangaben vorgegebenen Position in dem ersten und/oder dem zweiten realen Umgebungsbild. Die Positionsangaben können dabei vorzugsweise von der Steuereinheit anhand einer Eingabe von einem Nutzer an der Steuereinheit generiert werden. Mit dieser Ausführungsform des erfindungsgemäßen Verfahrens kann die Position des Objekts in den Umgebungsbildern vorgegeben werden. Beispielsweise kann ein Nutzer mittels der Steuereinheit vorgeben, an welcher Stelle in dem Umgebungsbild das virtuelle Objekt eingefügt wird. In besonderen Aspekten ist der Prozessor ausgelegt, die Position des virtuellen Objekts in ein oder mehreren Umgebungsbildern anhand von, insbesondere vorgebbaren, charakteristischen Merkmalen in den ein oder mehreren Umgebungsbilden anzupassen.

In einem weiteren vorteilhaften Aspekt basieren die ersten und/oder zweiten Instruktionen auf einer Eingabe an der Steuereinheit. Auf diese Weise kann eine Möglichkeit geschafften werden, dass ein Nutzer, insbesondere während der Live-Übertragung, das Rendering des virtuellen Objekts in den gerenderten Videostream beeinflussen kann.

Gemäß einem weiteren vorteilhaften Aspekt können die ersten und/oder zweiten Instruktionen von der Steuereinheit kabellos oder drahtgebunden, vorzugsweise über eine TCP/IP-Verbindung oder eine WiFi-Verbindung, empfangen werden, und vorzugsweise kann die Vorschau kabellos oder drahtgebunden, beispielsweise über die TCP/IP-Verbindung oder die WiFi-Verbindung, an die Steuereinheit ausgegeben werden.

Die Steuereinheit und der Prozessor können beispielsweise Teil separater Entitäten sein, die miteinander in Kommunikationsverbindung stehen, wobei vorzugsweise eine Bildaufnahmeeinrichtung und der Prozessor integraler Teil derselben Entität, wie beispielsweise einem Smartphone oder Tablett sind. Somit können die gerenderten Bilder durch einen Nutzer überprüft werden und das Rendering gegebenenfalls angepasst werden, während sich ein anderer Nutzer auf die Aufnahme der realen Umgebungsbilder konzentrieren kann. Eine Verbindung über eine TCP/IP-Verbindung oder eine WiFi-Verbindung kann besonders effizient implementiert werden, da auf bestehende Infrastruktur, vorzugsweise im Wege eines lokalen Netzwerks, zurückgegriffen werden kann.

Gemäß einem weiteren vorteilhaften Aspekt kann der Videostream mit der Vielzahl von realen Umgebungsbilden von einer Bildaufnahmeeinrichtung, insbesondere unmittelbar, empfangen werden. Eine Bildaufnahmeeinrichtung ist eine Vorrichtung, die dazu ausgelegt ist, den Videostream aufzunehmen. Indem der Videostream von der Bildaufnahmeeinrichtung unmittelbar empfangen wird, können Latenzzeiten verkürzt werden, was besonders vorteilhaft bei der Realisierung einer Live-Übertragung ist. Es ist somit möglich, dass die Bilder in Echtzeit oder nahezu Echtzeit von dem Prozessor empfangen werden können. Die Bildaufnahmeeinrichtung und der Prozessor können beispielsweise Teil derselben Entität, wie bei einem Smartphone oder Tablet sein.

Gemäß einem weiteren vorteilhaften Aspekt umfassen die Renderdaten eine Schattierung, eine Helligkeit, eine Auflösung und/oder, insbesondere und, eine Farbgebung des virtuellen Objekts. Außerdem können die Renderdaten, alternativ oder zusätzlich, Informationen zu einer Perspektive und/oder Größe einer Darstellung des virtuellen Objekts umfassen. Insbesondere kann durch die Renderdaten die Textur des virtuellen Objekts bestimmt werden.

Gemäß einem weiteren vorteilhaften Aspekt kann der gerenderte Videostream an eine externe Entität, vorzugsweise an eine Sendezentrale, ausgegeben werden, insbesondere über die Steuereinheit oder unmittelbar an die externe Einheit, wobei vorzugsweise der gerenderte Videostream über eine NDI-Verbindung ausgegeben wird. In einem Aspekt weiteren vorteilhaften kann der gerenderte Videostream durch Broadcasting, vorzugsweise unter Verwendung der NDI-Verbindung, ausgegeben werden. Damit kann eine NDI-fähige Einheit den gerenderten Videostream empfangen. In besonders bevorzugten Aspekten wird der gerenderte Videostream über die Steuereinheit an die Sendezentrale ausgegeben, wobei der gerenderte Videostream von dem Prozessor über eine NDI-Verbindung an die Steuereinheit ausgegeben wird. Die Steuereinheit kann beispielsweise als Mittler zwischen dem Prozessor und der Steuerzentrale fungieren. Der gerenderte Videostream kann in einigen bevorzugten Ausführungsformen Informationen umfassen, welche die Steuereinheit dazu veranlassen, den gerenderten Videostream an die Sendezentrale weiterzuleiten. Eine NDI-Schnittstelle ist für Live-Anwendungen regelmäßig vorteilhaft. Eine NDI-Schnittstelle ermöglicht eine möglichst latenzfreie Übertragung von größeren Datenmengen wie dem gerenderten Videostream. In weiteren vorteilhaften Ausführungsformen kann der gerenderte Videostream aber auch über eine lokale Umgebung, wie eine vorzugsweise lokale Wireless Lan Verbindung oder eine Bluetooth-Verbindung von dem Prozessor an die Steuereinheit gesandt werden. In weiteren vorteilhaften Aspekten kann auch vorgesehen sein, dass der gerenderte Videostream an einen internen Speicher ausgegeben wird. Der interne Speicher kann vorzugsweise Teil derselben Entität sein wie der Prozessor, wie dies beispielsweise bei einem Smartphone oder Tablet regelmäßig der Fall ist. In weiteren vorteilhaften Ausführungsformen kann der der interne Speicher aber auch in Kommunikationsverbindung mit der Entität des Prozessors stehen. Durch Ausgeben und Ablegen des gerenderten Videostreams auf einem internen Speicher kann ein offline Betrieb eingerichtet werden. Beispielsweise kann der gerenderte Videostream dann zu einem späteren Zeitpunkt nach dem Erzeugen an die externe Einheit übertragen werden.

Gemäß einem weiteren vorteilhaften Aspekt umfasst das erfindungsgemäße Verfahren auch die folgenden mittels der Steuereinheit durchgeführten Schritte: Empfangen, von dem Prozessor, des gerenderten Videostreams, vorzugsweise über eine NDI-Schnittstelle; und Weiterleiten des gerenderten Videostreams an eine Sendezentrale. Damit kann das Verfahren besonders flexibel im Feld durchgeführt werden. Die Steuereinheit kann beispielsweise ein Mittler zwischen dem Prozessor und der Sendezentrale sein. Die Steuereinheit kann beispielsweise kabellos oder kabelgebunden in Kommunikationsverbindung mit der Sendezentrale stehen. In anderen Beispielen kann die Steuereinheit als Hub für mehre Prozessoren, die jeweils Teil separater Entitäten sind, fungieren. Offline kann dabei beispielsweise bedeuten, dass keine Verbindung zum Internet besteht. In anderen Beispielen kann der gerenderte Videostream über eine lokale Umgebung, wie eine vorzugsweise lokale Wireless Lan Verbindung oder eine Bluetooth Verbindung von dem Prozessor an die Steuereinheit gesandt werden.

Gemäß einem weiteren vorteilhaften Aspekt sind die Steuereinheit und der Prozessor integraler Teil einer Entität, wobei vorzugsweise der Prozessor und die Bildaufnahmeeinrichtung Teil derselben Entität, wie beispielweise einem Smartphone oder Tablet, sind.

Damit können in einer vorteilhaften Ausführungsform sowohl der Prozessor als auch die Steuereinheit und die Bildaufnahmeeinrichtung Teil einer Entität sein. Die entsprechende Entität kann beispielsweise ein Smartphone oder Tablet sein. Ein Vorteil gemäß diesem Aspekt ist, dass ein einzelner Nutzer die Umgebungsbilder aufnehmen und gleichzeitig das Rendering des virtuellen Objekts in dem gerenderten Videostream anpassen kann. Damit ist eine besonders flexible Möglichkeit geschaffen, einen gerenderten Videostream für eine Live-Übertragung vor Ort aufzunehmen.

Gemäß einem weiteren vorteilhaften Aspekt sind die Steuereinheit und der Prozessor Teil separater Entitäten, wobei vorzugsweise der Prozessor und die Bildaufnahmeeinrichtung Teil derselben Entität sind. Beispielsweise können der Prozessor und die Bildaufnahmeeinrichtung Bestandteil eines Smartphones oder Tablets sein, wobei die Steuereinheit ein separater Computer ist, der in Kommunikationsverbindung mit dem Tablet oder dem Computer steht.

Damit können der Prozessor und vorzugsweise die Bildaufnahmeeinrichtung Teil einer Entität, wie beispielsweise einem Smartphone oder Tablet, sein, und die Steuereinheit ist Teil einer separaten Entität, die in Kommunikationsverbindung mit dem Smartphone steht, wie beispielsweise einem separaten Computer. Die Steuereinheit und der Prozessor können vorzugsweise über eine TCP/IP-Verbindung oder eine WiFi-Verbindung miteinander kommunizieren. Auf diese Weise kann eine Möglichkeit geschaffen werden, den gerenderten Videostream vor Ort durch einen Nutzer aufzunehmen, wobei eine Überprüfung und gegebenenfalls eine Korrektur des Renderings des virtuellen Objekts durch einen weiteren Nutzer durchgeführt werden kann. Damit kann sich der eine Nutzer auf die Aufnahme der realen Umgebungsbilder fokussieren, während der weitere Nutzer sich auf das Rendering konzentrieren kann. Damit ist eine Möglichkeit geschaffen, möglichst hochwertige gerenderte Videostreams zu erzeugen.

Weiterhin kann das erfindungsgemäße Verfahren vorteilhafterweise ebenfalls die an der Steuereinheit durchgeführten Schritte umfassen.

Gemäß einem weiteren vorteilhaften Aspekt kann das erfindungsgemäße Verfahren ferner die folgenden mittels der Steuereinheit durchgeführten Schritte umfassen: Empfangen einer Vorschau des ersten gerenderten Bilds von dem Prozessor; Wiedergeben der Vorschau mittels eines Displays; Empfangen einer Eingabe zum Anpassen des Renderns des virtuellen Objekts basierend auf der Wiedergabe der Vorschau; Erzeugen von Instruktionen zum Rendern des mindestens einen virtuellen Objekts auf Basis der Eingabe; und Senden der Instruktionen an den Prozessor. Auf diese Weise kann es einem Nutzer ermöglicht werden, anhand der Vorschau das Rendering des virtuellen Objekts zu überprüfen, und zu verifizieren, ob das Rendering des virtuellen Objekts im Vergleich zu dem Umgebungsbild realistisch ist. Ferner wird einem Nutzer die Möglichkeit geboten, das Rendering des virtuellen Objekts manuell anzupassen. Damit kann eine möglichst realistische Darstellung des virtuellen Objekts in dem gerenderten Videostreams erzeugt werden.

Ferner ist gemäß einem weiteren Aspekt der Erfindung eine Vorrichtung insbesondere ein Prozessor, zum Erzeugen eines gerenderten Videostreams, insbesondere für eine Live-Übertragung, vorgesehen, wobei die Vorrichtung ausgelegt und eingerichtet ist, die Verfahrensschritte nach dem zuvor beschriebenen erfindungsgemäßen Verfahren durchzuführen.

Ferner ist gemäß einem weiteren Aspekt der Erfindung ein Computerprogrammprodukt vorgesehen, umfassend Befehle, die bei der Ausführung des Programms durch eine Datenverarbeitungsvorrichtung, insbesondere der vorstehenden erfindungsgemäßen Vorrichtung, diese veranlassen, die Verfahrensschritte nach dem beschriebenen erfindungsgemäßen Verfahren auszuführen.

Darüber hinaus ist gemäß einem weiteren Aspekt der Erfindung ein computerlesbares Speichermedium vorgesehen, umfassend Befehle, die bei der Ausführung durch einen Computer diesen veranlassen, die Schritte des erfindungsgemäßen Verfahrens auszuführen,

Ferner ist gemäß einem weiteren Aspekt der Erfindung ein System zum Erzeugen eines gerenderten Videostreams, insbesondere für eine Live-Übertragung, vorgesehen, umfassend: die vorstehende erfindungsgemäße Vorrichtung, insbesondere den Prozessor, eine Steuereinheit in Kommunikationsverbindung, vorzugweise kabelgebunden oder kabellos, insbesondere über eine TCP/IP-Verbindung oder eine WiFi-Verbindung, mit der erfindungsgemäßen Vorrichtung, wobei die Steuereinheit vorzugsweise ausgelegt ist, die vorangegangenen Verfahrensschritte der Steuereinheit durchzuführen. Die Kommunikationsverbindung zwischen Prozessor und Steuereinheit kann alternativ auch durch eine lokale Umgebung, wie etwa eine Wireless Lan Verbindung oder eine Bluetooth-Verbindung gebildet werden. Die entsprechende Verbindung kann beispielsweise durch den Prozessor und/oder die Steuereinheit aufgebaut werden.

Das erfindungsgemäße System erlaubt es, besonders flexibel einen gerenderten Videostream zu erzeugen. Insbesondere kann der Videostream im Feld aufgenommen und vorzugsweise durch einen Nutzer modifiziert werden. Damit ist eine Möglichkeit geschaffen, dass ein Nutzer, beispielsweise über ein Smartphone oder ein Tablet, einen gerenderten Videostream aufnimmt, der zur weiteren Übertragung, insbesondere Live-Übertragung, weitergeleitet wird. Derselbe oder ein weiterer Nutzer kann in der Live-Übertragung die Darstellung des virtuellen Objekts in dem realen Umgebungsbild überprüfen und gegebenenfalls anpassen.

In einigen weiteren vorteilhaften Aspekten kann die Steuereinheit ausgelegt sein, den gerenderten Videostream von der erfindungsgemäßen Vorrichtung zu empfangen und an eine Sendezentrale weiterzuleiten. Damit ist das erfindungsgemäße Verfahren besonders flexibel einsetzbar.

In anderen vorteilhaften Aspekten kann der gerenderte Videostream mittels Broadcasting ausgegeben werden, vorzugsweise unter Verwendung einer NDI-Verbindung. Auf diese Weise kann eine entsprechende, für den Empfang eingerichtete externe Einheit den gerenderten Videostream empfangen.

In einigen weiteren vorteilhaften Aspekten umfasst das erfindungsgemäße System eine Bildaufnahmeeinheit in Kommunikationsverbindung mit der erfindungsgemäßen Vorrichtung, wobei die Bildaufnahmeeinheit ausgelegt ist, den Videostream aufzunehmen und vorzugsweise unmittelbar an die erfindungsgemäße Vorrichtung zu senden.

Mittels des erfindungsgemäßen Systems kann das erfindungsgemäße Verfahren durchgeführt werden, sodass die eingangs genannte Aufgabe gelöst wird und die genannten Vorteile erreicht werden.

In einem weiteren vorteilhaften Aspekt sind die Bildaufnahmeeinrichtung und die Vorrichtung integraler Teil derselben Entität. Die Entität kann beispielsweise ein Smartphone oder Tablet sein. Damit wird eine Anordnung bereitgestellt, die eine besonders flexible Aufnahme eines gerenderten Videostreams mit einem virtuellen Objekt vor Ort ermöglicht.

Gemäß einem weiteren vorteilhaften Aspekt können die erfindungsgemäße Vorrichtung und die Steuereinheit integraler Teil einer Entität sein. Auf diese Weise kann eine Möglichkeit geschaffen werden, so dass ein Nutzer, beispielsweise über ein Smartphone oder ein Tablet. einen gerenderten Videostream aufnimmt, der zur weiteren Live-Übertragung weitergeleitet wird, während derselbe Nutzer in der Live-Übertragung die Darstellung des virtuellen Objekts in dem realen Umgebungsbild überprüfen und anpassen kann.

Gemäß einem weiteren vorteilhaften Aspekt sind die erfindungsgemäße Vorrichtung und die Steuereinheit Teil separater Entitäten. Auf diese Weise kann eine Möglichkeit geschaffen werden, so dass ein Nutzer, beispielsweise über ein Smartphone oder ein Tablet, einen gerenderten Videostream aufnimmt, der zur weiteren Live-Übertragung weitergeleitet wird, während ein weiterer Nutzer in der Live-Übertragung die Darstellung des virtuellen Objekts in dem realen Umgebungsbild überprüfen und anpassen kann.

Der Erfindung liegt die überraschende Erkenntnis zugrunde, dass technisch unaufwendig auch Outdoor-Video-Aufnahmen unter Einbindung von Augmented Reality-Grafiken und/oder 3D-Elementen hochprofessionell umgesetzt werden können, und zwar auch bei Live-Übertragungen. Dies gelingt überraschenderweise mit einem relativ klein dimensionierten und leichtem Equipment, das sich ohne weiteres auch an entlegenere Orte mitnehmen lässt. Ferner wurde überraschend gefunden, dass das erfindungsgemäße Verfahren wie auch die erfindungsgemäße Vorrichtung und das erfindungsgemäße System eine sehr geringe Einrichtungszeit ermöglicht, so dass ganz neue Einsatzmöglichkeiten insbesondere für spontane Live-Berichterstattung möglich werden. Dies gestattet einen sehr flexiblen und zudem kostengünstigen Einsatz, ohne dass Einbußen hinsichtlich der Anforderung, hochmoderne Fernsehwiedergaben zu ermöglichen, in Kauf genommen werden müssen. Außerdem hat sich überraschend gezeigt, dass das erfindungsgemäße Verfahren sowie die erfindungsgemäße Vorrichtung bzw. das erfindungsgemäße System auch von nur einer einzigen Person bedient werden kann, wobei im Allgemeinen ein Team aus zwei Personen auch für komplexe Aufnahmesituationen völlig ausreichend ist, einem sogenannten Kameramann und einem Operator, der die gerenderten Inhalte steuert, welche in die Aufnahme zu integrieren sind.

Weitere Details und Vorteile der vorliegenden Erfindung werden anhand der nachfolgend genannten Abbildungen näher beschrieben.
- FIG. 1: zeigt beispielhaft ein System zum Erzeugen eines gerenderten Videostreams für eine Live-Übertragung in einer ersten Ausführungsform,
- FIG. 2: zeigt beispielhaft ein System zum Erzeugen zum Erzeugen eines gerenderten Videostreams für eine Live-Übertragung in weiteren Ausführungsform,
- Fig. 3: zeigt beispielhaft ein Bild aus einem gerenderten Videostream,
- Fig. 4: zeigt beispielhaft eine Schrittabfolge für ein Verfahren zum Erzeugen eines gerenderten Videostreams für eine Live-Übertragung.

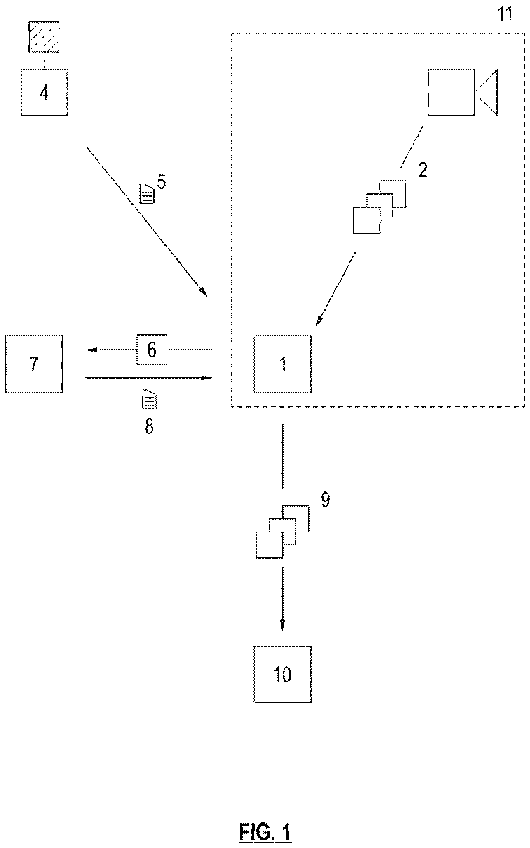

Figur 1 zeigt beispielhaft ein erfindungsgemäßes System zum Erzeugen eines gerenderten Videostreams, insbesondere für eine Live-Übertragung.

Das erfindungsgemäße System umfasst in der in Figur 1 gezeigten Ausführungsform einen Prozessor 1, eine Bildaufnahmeeinrichtung 3, einen Server 4, eine Steuereinheit 7 sowie eine Sendezentrale 10. Der Prozessor 1 bildet den Kern des Systems und erzeugt aus einem mit der Bildaufnahmeeinheit 3 aufgenommenen Videostream mit einer Vielzahl aufeinanderfolgender realer Umgebungsbilder 2 einen gerenderten Videostream mit einer entsprechenden Vielzahl von aufeinanderfolgenden gerenderten Bildern 9. Der gerenderte Videostream wird durch den Prozessor 1 in Echtzeit an die Sendezentrale 10 ausgegeben.

Der Videostream mit der Vielzahl von realen Umgebungsbildern 2 wird von einer Bildaufnahmeeinrichtung 3 aufgenommen und vorzugsweise unmittelbar an den Prozessor 1 gesandt. Der Videostream umfasst eine Vielzahl von an aufeinanderfolgenden Zeitpunkten aufgenommenen realen Umgebungsbildern 2 der Umgebung der Bildaufnahmeeinrichtung 3. Die realen Umgebungsbilder 2 bilden somit eine reale Umgebung ab. Vorzugsweise werden die realen Umgebungsbilder 2 des Videostreams aufeinanderfolgend entsprechend der Aufnahmezeit der jeweiligen Umgebungsbilder 2 an den Prozessor 1 gesandt oder in Gruppen abhängig von dem vorgesehenen Pufferspeicher und der zur Verfügung stehenden Bandbreite. Der Prozessor 1 empfängt den Videostream 2 in Echtzeit bzw. in nahezu Echtzeit von der Bildaufnahmeeinrichtung 3.

Weiterhin empfängt der Prozessor 1 von einem externen Server 4 Rohdaten 5 zu einem virtuellen Objekt 12. Auf dem Server 4 sind im Allgemeinen Rohdaten 5 von einem oder mehreren virtuellen Objekten 12 gespeichert. Die Rohdaten bilden vorzugsweise ein geometrisches Grundgerüst für das entsprechende virtuelle Objekt 12. Die Rohdaten 5 können auf einem flüchtigen oder nichtflüchtigen Speicher in Verbindung mit dem Prozessor 1 gespeichert werden, sodass der Prozessor 1 diese abrufen kann.

Für ein erstes reales Umgebungsbild 2 des von der Bildaufnahmeeinheit 3 empfangenen Videostreams erzeugt der Prozessor 1 Renderdaten zum Rendern des virtuellen Objekts 12. Die Renderdaten umfassen eine Textur, wie eine Schattierung, Farbgebung und/oder Helligkeit des virtuellen Objekts. Außerdem können die Renderdaten eine Ausrichtung und/oder Position und/oder Größe des virtuellen Objekts umfassen. Die Renderdaten können initial durch den Prozessor 1 anhand einer Auswertung von Parametern des ersten realen Umgebungsbilds 2 oder von mehreren realen Umgebungsbilder 2 erzeugt werden.

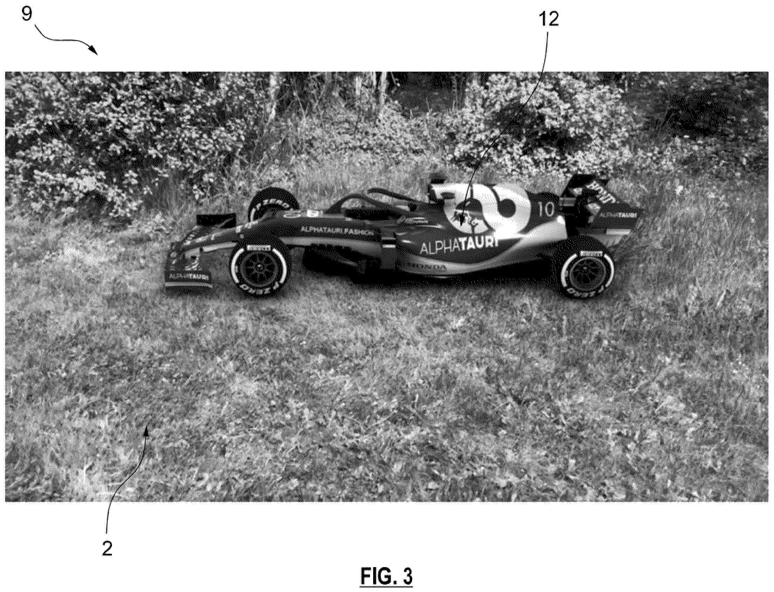

Basierend auf den Rohdaten 5 und den Renderdaten erzeugt der Prozessor 1 ein gerendertes virtuelles Objekt 12, das an das erste reale Umgebungsbild 2 angepasst ist. Weiterhin fügt der Prozessor 1 das gerenderte virtuelle Objekt 12 in das reale Umgebungsbild 2 ein und erzeugt somit aus dem ersten realen Umgebungsbild 2 und dem virtuellen Objekt 12 ein gerendertes Bild 9. In dem gerenderten Bild 9 ist das gerenderte virtuelle Objekt 12 in der Umgebung des realen Umgebungsbilds 2 abgebildet, wie in Figur 3 gezeigt.

Das gerenderte Bild 9 wird in dem gerenderten Videostream an die Sendezentrale 10 vorzugsweise in Echtzweit bzw. nahezu Echtzeit ausgegeben. Dazu kann der gerenderte Videostream über eine NDI-Verbindung ausgegeben werden. Der gerenderte Videostream 9 kann aber auch an eine beliebige andere externe Einheit ausgegeben werden. Auch ist daran gedacht, dass der gerenderte Videostream 9 durch Broadcasting ausgegeben werden kann, vorzugsweise mittels NDI, sodass eine dafür eingerichtete externe Einheit, wie die Sendezentrale 10 den gerenderten Videostream 9 empfangen kann.

Darüber hinaus sendet der Prozessor 1 eine Vorschau 6 des gerenderten Bilds 9 an die Steuereinheit 7. Die Steuereinheit 7 und der Prozessor 1 kommunizieren kabellos oder kabelgebunden, vorzugsweise über TCP/IP-Verbindung oder über eine Wireless LAN Verbindung. Die Steuereinheit 7 verfügt beispielsweise über eine Displayeinheit mittels der die Vorschau 6 angezeigt wird. Die Steuereinheit 7 ist derart eingerichtet, dass weiterhin eine Nutzeroberfläche über die Displayeinheit angezeigt werden kann. Die Nutzeroberfläche kann verschiedene Einstellungsparameter umfassen, mittels der das Rendering, d.h. die Textur, aber auch die Position und/oder Ausrichtung und/ oder Größe des gerenderten virtuellen Objekts 12 in dem realen Umgebungsbild angepasst werden kann. Weiterhin ist die Steuereinheit 7 eingerichtet, eine Eingabe zum Anpassen der Textur, der Position und/oder Ausrichtung und/oder Größe des virtuellen Objekts 12 zu empfangen. Die Steuereinheit 7 ist eingerichtet, auf eine entsprechende Eingabe Instruktionen 8 zu erzeugen, die Textur, die Position und/oder Ausrichtung und/ oder Größe des gerenderten virtuellen Objekts 12 anzupassen. Die Steuereinheit 7 sendet die Instruktionen 8 an den Prozessor 1. Die Instruktionen 8 enthalten Angaben für den Prozessor 1 die Renderdaten hinsichtlich der Textur und/oder der Position und/oder Ausrichtung und/oder Größe des gerenderten virtuellen Objekts 12 anzupassen.

Für ein zweite reales Umgebungsbild 2, welches dem ersten realen Umgebungsbild 2 in dem Videostream folgt, erzeugt der Prozessor 1 basierend auf den empfangen Instruktionen 8 zweite Renderdaten zum Rendern des virtuellen Objekts 12. Basierend auf den Rohdaten 5 und den zweiten Renderdaten erzeugt Prozessor 1 ein gerendertes virtuelles Objekt 12 und fügt das gerenderte virtuelle Objekt 12 in das zweite reale Umgebungsbild 2 ein. Durch Einfügen des gerenderten virtuellen Objekt 12 in das zweite reale Umgebungsbild 2 erzeugt der Prozessor 1 ein gerendertes zweites Bild 9, das in dem gerenderten Videostream 9 dem gerenderten ersten Bild nachfolgend an die Sendezentrale 10 ausgegeben wird.

Damit wird einem Nutzer die Möglichkeit geboten, während der laufenden Live-Übertragung das Rendering des virtuellen Objekts 12 in dem gerenderten Videostream anzupassen. Insofern kann eine möglichst realistische Darstellung des virtuellen Objekts 12 in dem gerenderten Videostream 12 erreicht werden. Die Prozedur kann für eine Vielzahl von empfangenen realen Umgebungsbildern 2 in dem Videostream während der Live-Übertragung wiederholt werden.

In der in Figur 1 gezeigten Ausführung sind die Bildaufnahmeeinrichtung 3 und der Prozessor 1 Teil einer Entität 11, wie beispielsweise eines Smartphones oder eines Tablets. Die Steuereinheit 7 ist separat von der Entität 11 und kommuniziert kabellos oder drahtgebunden, beispielsweise über TCP/IP-Verbindung oder über eine Wireless LAN Verbindung mit der Entität 11 bzw. dem Prozessor 1. Damit kann ein Nutzer die Umgebung unter Verwendung des Smartphones oder des Tablets filmen, wobei basierend auf dem so erzeugten Videostream mit der Vielzahl von realen Umgebungsbildern 2 der gerenderte Videostream erzeugt wird. Ein weiterer Nutzer kann parallel dazu das Rendering des virtuellen Objekts 12 beurteilen und anpassen. Somit kann der weitere Nutzer die Aufmerksamkeit auf die Erzeugung eine realistischen gerenderten Videostreams richten.

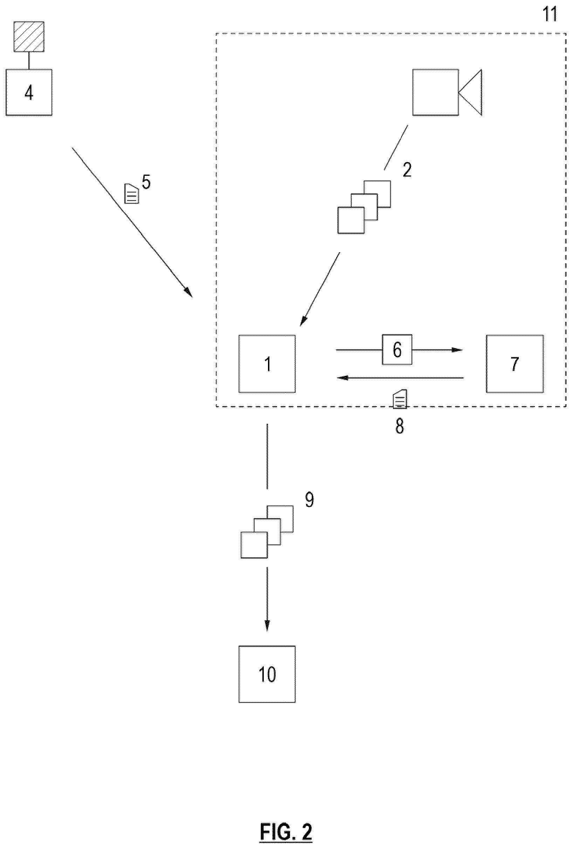

Figur 2 zeigt eine weitere Ausführung des Systems zum Erzeugen eines gerenderten Videostreams insbesondere für eine Live-Übertragung. Das in Figur 2 gezeigte System basiert dabei auf dem in Figur 1 gezeigten und beschriebenen System.

Im Unterschied zu der in Figur 1 gezeigten Ausführung sind der Prozessor 1, die Bildaufnahmeeinrichtung 3 und die Steuereinheit 7 integraler Teil derselben Entität 11, wie beispielsweise ein Smartphone oder ein Tablet. Damit kann die Aufnahme des Videostreams 2 mit der Vielzahl von realen Umgebungsbilder 2 sowie die Überprüfung und Anpassung des Renderings von einem einzelnen Nutzer vor Ort durchgeführt werden. In diesem Beispiel kommunizieren der Prozessor 1 und die Steuereinheit 7 kabelgebunden.

Figur 3 zeigt beispielhaft ein gerendertes Bild 9 in dem gerenderten Videostream. In dem gerenderten Bild 9 ist ein gerendertes virtuelles Objekt 12 in Form eines Rennwagens erkennbar, welches in eine reales Umgebungsbild 2 des Videostreams eingefügt wurde. Wie erkennbar ist, ist das Rendering des virtuellen Objekts 12 an die Umgebungsbedingungen, wie etwa die Beleuchtung, in dem realen Umgebungsbild 2 angepasst. Eine Vorschau 6 des entsprechenden gerenderten Bilds 9 kann einem Nutzer über die Steuereinheit 7 angezeigt werden. Basierend auf der Vorschau 6 kann ein Nutzer beurteilen, ob eine realistische Wiedergabe des virtuellen Objekts 12 entsprechend dem realen Umgebungsbild 2 erzielt wird. Dem Nutzer wird die Möglichkeit geboten während der Live-Übertragung das Rendering des virtuellen Objekts 12 in dem gerenderten Videostream manuell anzupassen und eine möglichst realistische Wiedergabe des gerenderten virtuellen Objekts 12 in dem gerenderten Videostream zu erhalten.

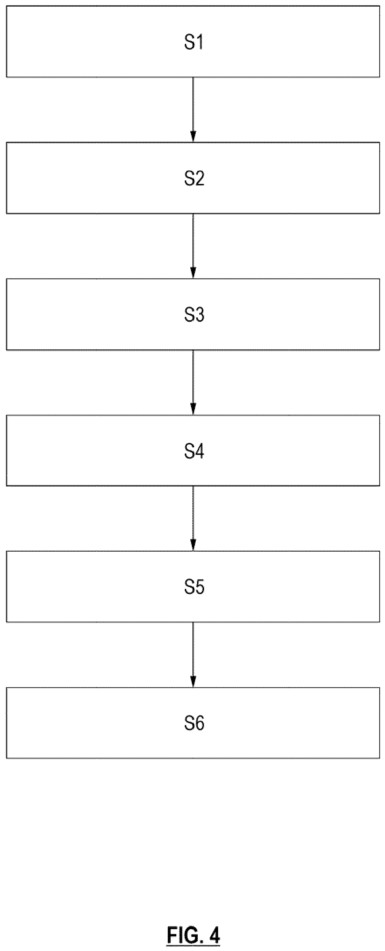

Figur 4 zeigt eine Sequenz der Schritte einer bevorzugten Ausführungsform deserfindungsgemäßen Verfahrens zum Erzeugen eines gerenderten Videostreams für eine Live-Übertragung. Schritt 1 umfasst das Empfangen eines Videostreams mit einer Vielzahl von realen Umgebungsbilden 2. Schritt 2 umfasst das Empfangen von Rohdaten 5 von mindestens einem virtuellen Objekt 12. Schritt 3 umfasst das Erzeugen von Renderdaten für das mindestens eine virtuelle Objekt 12 für ein erstes reales Umgebungsbild 2 der Vielzahl von realen Umgebungsbilden 2. Schritt 4 umfasst das Rendern des mindestens einen virtuellen Objekts 12 basierend auf den Rohdaten 5 und den Renderdaten, und Schritt 5 umfasst das Erzeugen eines gerenderten ersten Bilds 9 durch Einfügen des mindestens einen gerenderten virtuellen Objekts 12 in das erste reale Umgebungsbild 2. Schritt 6 umfasst das Ausgeben des gerenderten ersten Bilds 9 in dem gerenderten Videostream umfassend eine Vielzahl von gerenderten Bildern 9.

Weiterhin kann in einem Schritt 7 vorgesehen sein: das Ausgeben einer Vorschau 6 des gerenderten ersten Bilds 9 an die Steuereinheit 10. Ein Schritt 8 kann umfassen das Empfangen, von der Steuereinheit 10, von Instruktionen 8 zum Rendern des mindestens einen virtuellen Objekts 12 in Reaktion auf das Ausgeben der Vorschau 6. Ein Schritt 9 kann umfassen das Erzeugen von Renderdaten für das mindestens eine virtuelle Objekt 12 basierend auf den Instruktionen 8 für ein zweites, dem ersten realen Umgebungsbild 2 in dem Videostream nachfolgenden reales Umgebungsbild 2 der Vielzahl von realen Umgebungsbildern 2. Ein Schritt 10 kann umfassen das Rendern des mindestens einen virtuellen Objekts 12 basierend auf den Rohdaten 5 und den zweiten Renderdaten. Ein Schritt 9 kann umfassen das Erzeugen eines gerenderten zweiten Bilds 9 durch Einfügen des mindestens einen gerenderten virtuellen Objekts 12 in das zweite reale Umgebungsbild 2. Ein Schritt 10 kann umfassen das Ausgeben des gerenderten zweiten Bilds 9 nach dem gerenderten ersten Bild 9 in dem gerenderten Videostream.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Prozessor
- 2: reales Umgebungsbild
- 3: Bildaufnahmeeinrichtung
- 4: Server
- 5: Rohdaten
- 6: Vorschau
- 7: Steuereinheit
- 8: Instruktionen
- 9: gerendertes Umgebungsbild
- 10: Sendezentrale
- 11: Entität
- 12: virtuelles Objekt
- S1-S6: Verfahrensschritte

## Patentansprüche

1. Verfahren zum Erzeugen eines gerenderten Videostreams, insbesondere für eine Live-Übertragung, umfassend die folgenden mittels eines Prozessors (1) durchgeführten Schritte:
- Empfangen eines Videostreams mit einer Vielzahl von realen Umgebungsbildern (2);
- Empfangen von Rohdaten (5) von mindestens einem virtuellen Objekt (12);
- Für ein erstes reales Umgebungsbild (2) der Vielzahl von realen Umgebungsbildern (2):
- Erzeugen von Renderdaten für das mindestens eine virtuelle Objekt (12),
- Rendern des mindestens einen virtuellen Objekts (12) basierend auf den Rohdaten (5) und den Renderdaten, und
- Erzeugen eines gerenderten ersten Bilds (9) durch Einfügen des mindestens einen gerenderten virtuellen Objekts (12) in das erste reale Umgebungsbild (2); und
- Ausgeben des gerenderten ersten Bilds (9) in dem gerenderten Videostream umfassend eine Vielzahl von gerenderten Bildern (9).

2. Verfahren nach Anspruch 1, **dadurch gekennzeichnet, dass** das Erzeugen von Renderdaten umfasst:
- Empfangen, von einer Steuereinheit (7), von ersten Instruktionen (8) zum Erzeugen der Renderdaten, und
- Erzeugen der Renderdaten basierend auf den ersten Instruktionen (8).

3. Verfahren nach einem der Ansprüche 1 oder 2, **dadurch gekennzeichnet, dass** das Verfahren ferner die folgenden mittels des Prozessors (1) durchgeführten Schritte umfasst:
- Ausgeben einer Vorschau (6) des gerenderten ersten Bilds (9) an die Steuereinheit (7);
- Empfangen, von der Steuereinheit (7), von zweiten Instruktionen (8) zum Rendern des mindestens einen virtuellen Objekts (12) in Reaktion auf das Ausgeben der Vorschau (6),
- Für ein zweites dem ersten realen Umgebungsbild (2) in dem Videostream nachfolgenden realen Umgebungsbild (2) der Vielzahl von realen Umgebungsbilder (2):
- Erzeugen von zweiten Renderdaten für das mindestens eine virtuelle Objekt (12) basierend auf den zweiten Instruktionen (8),
- Rendern des mindestens einen virtuellen Objekts (12) basierend auf den Rohdaten (5) und den zweiten Renderdaten, und
- Erzeugen eines gerenderten zweiten Bilds (9) durch Einfügen des mindestens einen gerenderten virtuellen Objekts (12) in das zweite reale Umgebungsbild (2); und
- Ausgeben des gerenderten zweiten Bilds (9) nach dem gerenderten ersten Bild (9) in dem gerenderten Videostream.

4. Verfahren nach einem der vorangegangenen Ansprüche, **dadurch gekennzeichnet, dass**
das Verfahren ferner die folgenden mittels des Prozessors (1) durchgeführten Schritte umfasst:
- Empfangen, von der Steuereinheit (7), von Positionsangaben zum Positionieren des virtuellen Objekts (12) in dem ersten realen Umgebungsbild (2) und/oder dem zweiten realen Umgebungsbild (2), und
- Einfügen des mindestens einen gerenderten virtuellen Objekts (12) an einer durch die Positionsangaben vorgegebenen Position in dem ersten und/oder dem zweiten realen Umgebungsbild (2).

5. Verfahren nach einem der Ansprüche 2 bis 4, **dadurch gekennzeichnet, dass**
die ersten und/oder zweiten Instruktionen (8) auf einer Eingabe an der Steuereinheit (7) basieren.

6. Verfahren nach einem der Ansprüche 2 bis 5, **dadurch gekennzeichnet, dass**
die ersten und/oder zweiten Instruktionen (8) von der Steuereinheit (7) kabellos oder drahtgebunden, vorzugsweise über eine TCP/IP-Verbindung oder eine WiFi-Verbindung, empfangen werden, und vorzugsweise die Vorschau (6) kabellos oder drahtgebunden, vorzugsweise über die TCP/IP-Verbindung oder die WiFi-Verbindung, an die Steuereinheit (7) ausgegeben wird.

7. Verfahren nach einem der vorangegangenen Ansprüche, **dadurch gekennzeichnet, dass**
der gerenderte Videostream an eine externe Einheit, vorzugsweise an eine Sendezentrale (10), ausgegeben wird, insbesondere über die Steuereinheit (7) oder unmittelbar an die externe Einheit, wobei vorzugsweise der gerenderte Videostream über eine NDI-Verbindung ausgegeben wird.

8. Verfahren nach einem der vorangegangenen Ansprüche, **dadurch gekennzeichnet, dass**
das Verfahren ferner die folgenden mittels der Steuereinheit (7) durchgeführten Schritte umfasst:
Empfangen, von dem Prozessor (1), des gerenderten Videostreams; und Weiterleiten des gerenderten Videostreams an eine Sendezentrale (10).

9. Verfahren nach einem der Ansprüche 2 bis 8, **dadurch gekennzeichnet, dass** die Steuereinheit (7) und der Prozessor (1) integraler Teil einer Entität (11) sind oder Steuereinheit (7) und der Prozessor (1) Teil separater Entitäten (11) sind, wobei vorzugsweise der Prozessor (1) und die Bildaufnahmeeinrichtung (3) Teil derselben Entität sind.

10. Verfahren nach einem der Ansprüche 2 bis 9, **dadurch gekennzeichnet, dass** das Verfahren ferner die folgenden mittels der Steuereinheit (7) durchgeführten Schritte umfasst:
- Empfangen der Vorschau (6) des ersten gerenderten Bilds (9) von dem Prozessor (1);
- Wiedergeben der Vorschau (6) mittels eines Displays;
- Empfangen einer Eingabe zum Anpassen der Renderdaten des virtuellen Objekts (12) in Reaktion auf die Wiedergabe der Vorschau (6);
- Erzeugen von Instruktionen (8) zum Rendern des mindestens einen virtuellen Objekts (12) auf Basis der Eingabe; und
- Senden der Instruktionen (8) an den Prozessor (1).

11. Vorrichtung, insbesondere ein Prozessor (1), zum Erzeugen eines gerenderten Videostreams, vorzugsweise für eine Live-Übertragung, wobei die Vorrichtung ausgelegt und eingerichtet ist, die Verfahrensschritte nach einem der Ansprüche 1 bis 9 durchzuführen.

12. Computerprogrammprodukt, umfassend Befehle, die bei der Ausführung des Programms durch eine Datenverarbeitungsvorrichtung, insbesondere eine Vorrichtung nach Anspruch 11, diese veranlassen, die Verfahrensschritte nach mindestens einem der Ansprüche 1 bis 9 durchzuführen.

13. Computerlesbares Speichermedium, umfassend Befehle, die bei der Ausführung durch einen Computer diesen veranlassen, die Schritte des Verfahrens nach einem der Ansprüche 1 bis 9 durchzuführen.

14. System zum Erzeugen eines gerenderten Videostreams, insbesondere für eine Live-Übertragung, das System umfassend:
- die Vorrichtung nach Anspruch 13,
- eine Steuereinheit (7) in Kommunikationsverbindung, vorzugweise kabelgebunden oder kabellos mit der Vorrichtung umfasst, wobei die Steuereinheit (7) vorzugsweise ausgelegt ist, die Schritte des Verfahrens nach einem der Ansprüche 1 bis 10 durchzuführen.

15. System nach Anspruch 14, **dadurch gekennzeichnet, dass**
die Steuereinheit (1) ausgelegt ist, den gerenderten Videostream von der Vorrichtung zu empfangen und an eine Sendezentrale (10) weiterzuleiten.

16. System nach Anspruch 14 oder 15, **dadurch gekennzeichnet, dass** die Vorrichtung und die Steuereinheit (7) integraler Teil einer Entität (11) sind.

17. System nach Anspruch 14 oder 15, **dadurch gekennzeichnet, dass** die Vorrichtung und die Steuereinheit (7) separate Entitäten (11) sind.

## Geänderte Patentansprüche

### Geänderte Patentansprüche gemäss Regel 137(2) EPÜ.

1. Verfahren zum Erzeugen eines gerenderten Videostreams, insbesondere für eine Live-Übertragung, umfassend die folgenden mittels eines Prozessors (1) durchgeführten Schritte:
- Empfangen eines Videostreams mit einer Vielzahl von realen Umgebungsbildern (2);
- Empfangen von Rohdaten (5) von mindestens einem virtuellen Objekt (12);
- Für ein erstes reales Umgebungsbild (2) der Vielzahl von realen Umgebungsbildern (2):
- Erzeugen von Renderdaten für das mindestens eine virtuelle Objekt (12), umfassend:
- Empfangen, von einer Steuereinheit (7), von ersten Instruktionen (8) zum Erzeugen der Renderdaten, und
- Erzeugen der Renderdaten basierend auf den ersten Instruktionen (8),
- Rendern des mindestens einen virtuellen Objekts (12) basierend auf den Rohdaten (5) und den Renderdaten, und
- Erzeugen eines gerenderten ersten Bilds (9) durch Einfügen des mindestens einen gerenderten virtuellen Objekts (12) in das erste reale Umgebungsbild (2); und
- Ausgeben des gerenderten ersten Bilds (9) in dem gerenderten Videostream umfassend eine Vielzahl von gerenderten Bildern (9),
- Ausgeben einer Vorschau (6) des gerenderten ersten Bilds (9) an die Steuereinheit (7);
- Empfangen, von der Steuereinheit (7), von zweiten Instruktionen (8) zum Rendern des mindestens einen virtuellen Objekts (12) in Reaktion auf das Ausgeben der Vorschau (6),
- Für ein zweites dem ersten realen Umgebungsbild (2) in dem Videostream nachfolgenden realen Umgebungsbild (2) der Vielzahl von realen Umgebungsbilder (2):
- Erzeugen von zweiten Renderdaten für das mindestens eine virtuelle Objekt (12) basierend auf den zweiten Instruktionen (8),
- Rendern des mindestens einen virtuellen Objekts (12) basierend auf den Rohdaten (5) und den zweiten Renderdaten, und
- Erzeugen eines gerenderten zweiten Bilds (9) durch Einfügen des mindestens einen gerenderten virtuellen Objekts (12) in das zweite reale Umgebungsbild (2); und
- Ausgeben des gerenderten zweiten Bilds (9) nach dem gerenderten ersten Bild (9) in dem gerenderten Videostream,
- Empfangen, von der Steuereinheit (7), von Positionsangaben zum Positionieren des virtuellen Objekts (12) in dem ersten realen Umgebungsbild (2) und/oder dem zweiten realen Umgebungsbild (2), und
- Einfügen des mindestens einen gerenderten virtuellen Objekts (12) an einer durch die Positionsangaben vorgegebenen Position in dem ersten und/oder dem zweiten realen Umgebungsbild (2),
wobei der gerenderte Videostream über die Steuereinheit (7) oder unmittelbar an eine externe Einheit (10) ausgegeben wird.

2. Verfahren nach Anspruch 1, **dadurch gekennzeichnet, dass** die ersten und/oder zweiten Instruktionen (8) auf einer Eingabe an der Steuereinheit (7) basieren.

3. Verfahren nach Anspruch 1 oder 2, **dadurch gekennzeichnet, dass** die ersten und/oder zweiten Instruktionen (8) von der Steuereinheit (7) kabellos oder drahtgebunden, vorzugsweise über eine TCP/IP-Verbindung oder eine WiFi-Verbindung, empfangen werden, und vorzugsweise die Vorschau (6) kabellos oder drahtgebunden, vorzugsweise über die TCP/IP-Verbindung oder die WiFi-Verbindung, an die Steuereinheit (7) ausgegeben wird.

4. Verfahren nach einem der vorangegangenen Ansprüche, **dadurch gekennzeichnet, dass**
der gerenderte Videostream an die externe Einheit, vorzugsweise an eine Sendezentrale (10), über eine NDI-Verbindung ausgegeben wird.

5. Verfahren nach einem der vorangegangenen Ansprüche, **dadurch gekennzeichnet, dass**
das Verfahren ferner die folgenden mittels der Steuereinheit (7) durchgeführten Schritte umfasst:
Empfangen, von dem Prozessor (1), des gerenderten Videostreams; und
Weiterleiten des gerenderten Videostreams an eine Sendezentrale (10).

6. Verfahren nach einem der Ansprüche 1 bis 5, **dadurch gekennzeichnet, dass** die Steuereinheit (7) und der Prozessor (1) integraler Teil einer Entität (11) sind oder Steuereinheit (7) und der Prozessor (1) Teil separater Entitäten (11) sind, wobei vorzugsweise der Prozessor (1) und die Bildaufnahmeeinrichtung (3) Teil derselben Entität sind.

7. Verfahren nach einem der Ansprüche 1 bis 6, **dadurch gekennzeichnet, dass** das Verfahren ferner die folgenden mittels der Steuereinheit (7) durchgeführten Schritte umfasst:
- Empfangen der Vorschau (6) des ersten gerenderten Bilds (9) von dem Prozessor (1);
- Wiedergeben der Vorschau (6) mittels eines Displays;
- Empfangen einer Eingabe zum Anpassen der Renderdaten des virtuellen Objekts (12) in Reaktion auf die Wiedergabe der Vorschau (6);
- Erzeugen von Instruktionen (8) zum Rendern des mindestens einen virtuellen Objekts (12) auf Basis der Eingabe; und
- Senden der Instruktionen (8) an den Prozessor (1).

8. Vorrichtung, insbesondere ein Prozessor (1), zum Erzeugen eines gerenderten Videostreams, vorzugsweise für eine Live-Übertragung, wobei die Vorrichtung ausgelegt und eingerichtet ist, die Verfahrensschritte nach einem der Ansprüche 1 bis 6 durchzuführen.

9. Computerprogrammprodukt, umfassend Befehle, die bei der Ausführung des Programms durch eine Datenverarbeitungsvorrichtung, insbesondere eine Vorrichtung nach Anspruch 8, diese veranlassen, die Verfahrensschritte nach mindestens einem der Ansprüche 1 bis 6 durchzuführen.

10. Computerlesbares Speichermedium, umfassend Befehle, die bei der Ausführung durch einen Computer diesen veranlassen, die Schritte des Verfahrens nach einem der Ansprüche 1 bis 6 durchzuführen.

11. System zum Erzeugen eines gerenderten Videostreams, insbesondere für eine Live-Übertragung, das System umfassend:
- die Vorrichtung nach Anspruch 10,
- eine Steuereinheit (7) in Kommunikationsverbindung, vorzugweise kabelgebunden oder kabellos mit der Vorrichtung umfasst, wobei die Steuereinheit (7) vorzugsweise ausgelegt ist, die Schritte des Verfahrens nach einem der Ansprüche 1 bis 7 durchzuführen.

12. System nach Anspruch 11, **dadurch gekennzeichnet, dass** die Steuereinheit (1) ausgelegt ist, den gerenderten Videostream von der Vorrichtung zu empfangen und an eine Sendezentrale (10) weiterzuleiten.

13. System nach Anspruch 11 oder 12, **dadurch gekennzeichnet, dass** die Vorrichtung und die Steuereinheit (7) integraler Teil einer Entität (11) sind.

14. System nach Anspruch 11 oder 12, **dadurch gekennzeichnet, dass** die Vorrichtung und die Steuereinheit (7) separate Entitäten (11) sind.
